# EUROPÄISCHE PATENTSCHRIFT

(11) **EP 1 256 741 B1**
(45) Veröffentlichungstag und Bekanntmachung des Hinweises auf die Patenterteilung: **30.06.2004**
(21) Anmeldenummer: 02008880.3
(22) Anmeldetag: 20.04.2002
(51) Int. Cl.: F16D 69/04, F16D 66/02

(54) **Brems- oder Kupplungsbelag sowie Verfahren zu seiner Herstellung**
Brake or clutch lining and method for its production
Patin de frein ou d'embrayage et son procédé de fabrication

(30) Priorität: 11.05.2001 DE 10123004
(43) Veröffentlichungstag der Anmeldung: 13.11.2002
(73) Patentinhaber: TMD Friction Europe GmbH, 51381 Leverkusen (DE)
(72) Erfinder: Eisengräber, Reinhard, Dipl.-Ing., 45359 Essen (DE)
(74) Vertreter: Hosbach, Hans Ulrich, Dipl.-Ing.

(56) Entgegenhaltungen:
- DE-A- 1 555 973
- DE-A- 2 048 584
- DE-A- 2 949 356
- DE-A- 3 124 527
- DE-A- 19 603 869
- DE-U- 29 821 482
- FR-A- 2 441 100

## Beschreibung

Die Erfindung betrifft einen Brems- oder Kupplungsbelag, insbesondere für Scheibenbremsen oder -kupplungen, mit einer Trägerplatte, einem auf der Trägerplatte befestigen Reibbelag und einer Verschleißanzeige. Ferner betrifft die Erfindung ein Verfahren zum Herstellen eines solchen Brems- oder Kupplungsbelags.

Bei Brems- oder Kupplungsbelägen besteht die Trägerplatte in der Regel aus Stahl. Dies bedingt ein entsprechendes Gewicht. Auch müssen spezielle Maßnahmen für die Anbringung der Verschleißanzeige getroffen werden. Handelt es sich um eine mechanische Verschleißanzeige, so muß das akustische Schwingungselement in einem gesonderten Arbeitsgang mit der Trägerplatte verbunden werden. Arbeitet die Verschleißanzeige als elektrischer Berührungssensor, so ist eine entsprechende, durch die Trägerplatte hindurchführende Ausnehmung zum Einklippen des Sensors erforderlich. Der Verbund mit dem Reibbelag kann eine Zwischenschicht, eine Folie und/oder eine Klebeschicht umfassen. Das Dokument DE-A-15 55 973 offenbart einen Bremsbelag mit den Merkmalen des Oberbegriffs des Anspruchs 1.

Der Erfindung liegt die Aufgabe zugrunde, die Produktion eines einfach herstellbaren, leichtgewichtigen Brems- oder Kupplungsbelags mit integrierter Verschleißanzeige zu ermöglichen.

Zur Lösung dieser Aufgabe ist der eingangs genannte Brems- oder Kupplungsbelag erfindungsgemäß dadurch gekennzeichnet,
- daß in die Trägerplatte mindestens ein flaches Einlegeteil eingebettet ist und
- daß das Einlegeteil mindestens einen aus der Trägerplatte vorstehenden Vorsprung trägt, der sich von der Trägerplatte aus über das Niveau einer Verbindungsfläche zwischen Reibbelag und Trägerplatte hinauserstreckt und in den Reibbelag eingreift.

Durch die Verwendung eines geeigneten, vorzugsweise duroplastischen Kunststoffs ergibt sich gegenüber Stahl eine beträchtliche Gewichtsersparnis für die Trägerplatte. Dennoch läßt sich eine ausreichende Festigkeit gewährleisten, und zwar durch das flache Einlegeteil. Dieses erfüllt zwei Funktionen. Zum einen stellt es eine Verstärkungseinlage dar, und zum anderen bildet es mit seinem in das Material des Reibbelags hineinragenden oder neben dem Reibbelag abstehenden Vorsprung die Verschleißanzeige. Die Verschleißanzeige ist also in die leichtgewichtige Trägerplatte integriert.

Überraschenderweise hat es sich gezeigt, daß das Reibmaterial einen sehr innigen Verbund mit dem Kunststoff der Trägerplatte eingeht. Es können also hohe Scherkräfte übertragen werden. Dies wird erzielt ohne den sonst üblichen Aufwand an Verfahrenstechnik, der erforderlich ist, um den aufgepreßten, aufgesinterten, aufgenieteten oder aufgeklebten Reibbelag ausreichend fest mit der stählernen Trägerplatte zu verbinden.

Ferner entfällt durch die Verwendung des Kunststoffs das Problem des Unterrostens, das bei stählernen Trägerplatten von gravierender Bedeutung ist. Der Kunststoff kommt außerdem ohne Lackierung aus.

Schließlich sei noch hervorgehoben, daß die Wärmeleitfähigkeit von Kunststoff wesentlich geringer ist als die von Stahl. Das Brems- oder Kupplungssystem wird also automatisch gegen eine überhöhte Erwärmung geschützt. Außerdem bewirkt der Kunststoff eine gute Geräuschdämmung.

Die leichte Verarbeitbarkeit von Kunststoff bietet ohne weiteres die Möglichkeit, die Trägerplatte mit Vertiefungen oder Asymmetrien zu versehen. Diese Maßnahmen können zur Verbesserung des Belagschrägverschleißes dienen oder den Druckpunkt verschieben, um ein geändertes Schwing- und Geräuschverhalten zu erzielen. Im übrigen kann der Kunststoff durch Fasern, Matten, oder dgl. verstärkt werden.

Das Einlegeteil ist vorzugsweise in einem Bereich der Trägerplatte angeordnet, in den die Zuspannkräfte eingeleitet werden. Hieraus können sich Unterschiede ergeben, und zwar in Abhängigkeit davon, ob der Belag faustseitig oder kolbenseitig vorgesehen ist. Häufig wird man das Einlegeteil so großflächig wählen, daß es sämtliche kritischen Bereiche überdeckt. Dies gilt auch für Führungsansätze, wie sie seitlich an der Trägerplatte angeordnet sein können.

Der Vorsprung des Einlegeteils, der in das Material des Reibbelags hineinragt oder neben dem Reibbelag von der Trägerplatte absteht, kann als mechanische Verschleißanzeige arbeiten. Tritt der Vorsprung mit der rotiernden Brems- oder Kupplungsscheibe in Berührung, erzeugt er laute Geräusche, die dem Fahrer den Verschleiß des Bremsbelags signalisieren. Zusätzlich oder alternativ kann der Vorsprung als elektrischer Signalgeber dienen, sofern, was besonders vorteilhaft ist, das Einlegeteil aus elektrisch leitfähigem Material besteht. Es wird dann mit einem Kabel verbunden, und der Vorsprung erzeugt ein Signal, sobald über die Brems- oder Kupplungsscheibe Masseschluß hergestellt wird. Dementsprechend leuchtet am Armaturenbrett eine Verschleißwarnleuchte auf. Ein gesonderter Sensor mit zugehörigem Klip ist nicht erforderlich.

Die Formgebung für das Einlegeteil ist grundsätzlich nicht kritisch. Wesentlich ist, daß es eine flache Form besitzt und mit dem Vorsprung für die Verschleißanzeige versehen ist. So kann es sich um ein einfaches Blech handeln, das mit dem Vorsprung verbunden ist. Auch kommen Bleche mit Noppen, Sicken oder sonstigen Formationen in Frage, und zwar auch als Stanzteile. Als besonders vorteilhaft hat sich ein mit Rippen versehenes Lochblech erwiesen. Die Löcher vermindern das Gewicht, ohne die Verstärkungsfunktion zu beeinträchtigen. Die längs und/oder quer verlaufenden Rippen bilden eine Mehrzahl von Vorsprüngen und dementsprechend eine über der Fläche verteilte Verschleißanzeige. Grundsätzlich wird man dafür sorgen, daß einlauf- und auslauseitig jeweils mindestens ein Vorsprung, im vorliegenden Fall also eine Rippe vorhanden ist. Im übrigen sind die Vorsprünge in der Lage, den Verbund zwischen dem Kunststoff und dem Reibmaterial noch zusätzlich zu verstärken. Die Blechstärken können zwischen 0,5 mm und 2,5 mm liegen.

Duroplastischer Kunststoff hat sich, wie bereits erwähnt, als besonders vorteilhaft erwiesen. Auf thermoplastische Kunststoffe kann jedoch auch zurückgegriffen werden.

Das erfindungsgemäße Verfahren zum Herstellen eine Brems- oder Kupplungsbelags ist zur Lösung der gestellten Aufgabe dadurch gekennzeichnet, daß ein Reibmaterial, das die Form eines Reibbelags aufweist, mit einem Kunststoffmaterial verpreßt wird, das die Form einer Trägerplatte aufweist und in das ein flaches Einglegeteil eingebettet ist. Der einfache Vorgang des Verpressens genügt, um die bereits hervorgehobene sehr gute Haftung des Reibbelags auf der Trägerplatte zu erzielen. Das Verfahren läßt sich in einfacher Weise durchführen. Dies gilt insbesondere dann, wenn die Materialien in eine Form geschüttet und in dieser verpreßt werden. Beispielsweise schüttet man erst das Reibmaterial ein und glättet dessen Oberfläche. Es folgt sodann eine erste Schüttung des Kunststoffs, auf die das Einlegeteil aufgelegt wird, und zwar derart, daß es mit seinem Vorsprung bzw. mit seinen Vorsprüngen in das Reibmaterial eindringt. Auf diesen Verbund wird sodann eine zweite Kunststoffschüttung aufgebracht, woraufhin das Verpressen des Verbundkörpers erfolgt, und zwar vorzugsweise unter gleichzeitiger Wärmezufuhr.

Abweichend von dieser Vorgehensweise kann es auch vorteilhaft sein, die Reibmaterialschicht und die Kunststoffschichten als Vorpreßlinge zu fertigen und sodann unter Einschluß des Einlegeteils miteinander zu verpressen. Kombinationen dieser Vorgehensweisen sind gleichermaßen möglich, beispielsweise das Einschütten des Reibmaterials und das Einbringen der Kunststoffschichten als Vorpreßlinge. Hier sind sämtliche Variationsmöglichkeiten denkbar.

Schließlich besteht in Weiterbildung der Erfindung die Möglichkeit, den Kunststoff und/oder das Reibmaterial durch Spritzgießen zu verpressen. Dies gilt auch für nur eine der Kunststoffschichten. Dabei kann das Reibmaterial gleichermaßen als Schüttung oder Vorpreßling vorliegen oder durch Spritzgießen verarbeitet werden, wobei der Anteil an abrasiven Stoffen allerdings relativ gering sein sollte.

Unter Umständen sind zusätzliche Maßnahmen erforderlich, um das Einlegeteil während des Herstellungsvorganges in der Form zu fixieren. Ein seitlicher Überstand sollte allerdings vermieden werden.

Die Erfindung wird im folgenden anhand bevorzugter Ausführungsbeispiele im zusammenhang mit der beiliegenden Zeichnung näher erläutert. Die Zeichnung zeigt in:
Figur 1 in schematischer Darstellung einen Schnitt durch einen Bremsbelag;
Figur 2 eine schematische Darstellung eines Herstellungsverfahrens;
Figur 3 ein etwas anders gestaltetes Einlegeteil;
Figur 4 bis Figur 7 Trägerplatten mit unterschiedlich angeordneten Einlegeteilen;
Figur 8 einen Schnitt entsprechend Figur 1 durch eine abgewandelte Ausführungsform.

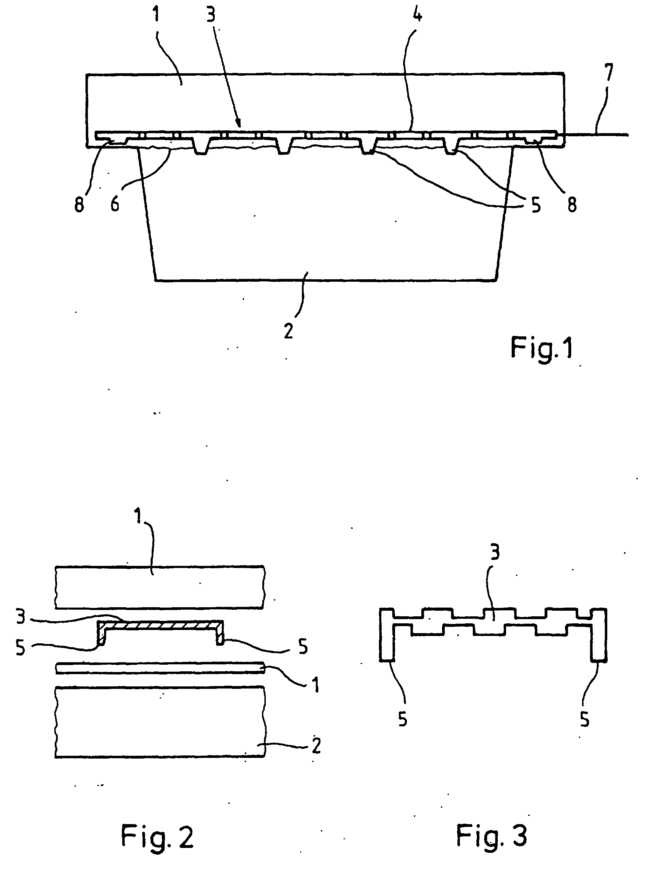

Nach Figur 1 weist der Bremsbelag eine Trägerplatte 1 auf, die mit einem Reibbelag 2 versehen ist. Die Trägerplatte 1 besteht aus duroplastischem Kunststoff und enthält ein Einlegeteil 3, welches als Verstärkung und gleichzeitig als Verschleißanzeige dient.

Das Einlegeteil 3 wird von einem Lochblech 4 gebildet, welches mit Vorsprüngen 5 in Form von Rippen versehen ist. Wie durch eine unregelmäßige Linie 6, die die Trennebene zwischen dem Reibmaterial und dem Kunststoff definiert, angedeutet, ragen die Vorsprünge 5 in das Reibmaterial hinein. Wenn der Reibbelag 2 entsprechend verschlissen ist, kommen die Vorsprünge 5 mit der rotierenden Bremsscheibe in Berührung. Das entstehende Geräusch weist den Fahrer auf den eingetretenen Verschleiß hin.

Außerdem besteht das Einlegeteil 3 aus elektrisch leitfähigem Material und ist über ein Kabel 7 an eine Warnleuchte des Armaturenbretts angeschlossen. Bei Masseschluß über die Bremsscheibe wird die Leuchte mit Strom versorgt.

Figur 1 zeigt ferner anschlagartige Ansätze 8, die dazu dienen, das Einlegeteil 3 während des Herstellungsvorgangs zu positionieren.

Figur 2 zeigt schematisch in auseinandergezogener Darstellung die einzelnen Schritte eines bevorzugten Herstellungsverfahrens. Dabei wird das Material des Reibbelags 2 in eine Form geschüttet und auf der Oberfläche geglättet. Sodann wird als weitere Schüttung ein Teil des Kunststoffmaterials für die Trägerplatte 1 eingebracht. In diese wird das Einsteckteil 3 eingelegt, und zwar derart, daß die Vorsprünge 5 in das Material des Reibbelags 2 eindringen. Sodann erfolgt als letzte Schüttung das Einbringen des Hauptteils des Kunststoffs für die Trägerplatte 1. Schließlich wird der Verbundkörper verpreßt, wobei die Materialien partiell aushärten und sich innig miteinander verbinden. Anschließend erfolgt dann das vollständige Aushärten unter Wärmezufuhr.

Figur 3 zeigt eine etwas abgewandelte Ausführungsform eines Einlegeteils 3 mit seinen Vorsprüngen 5.

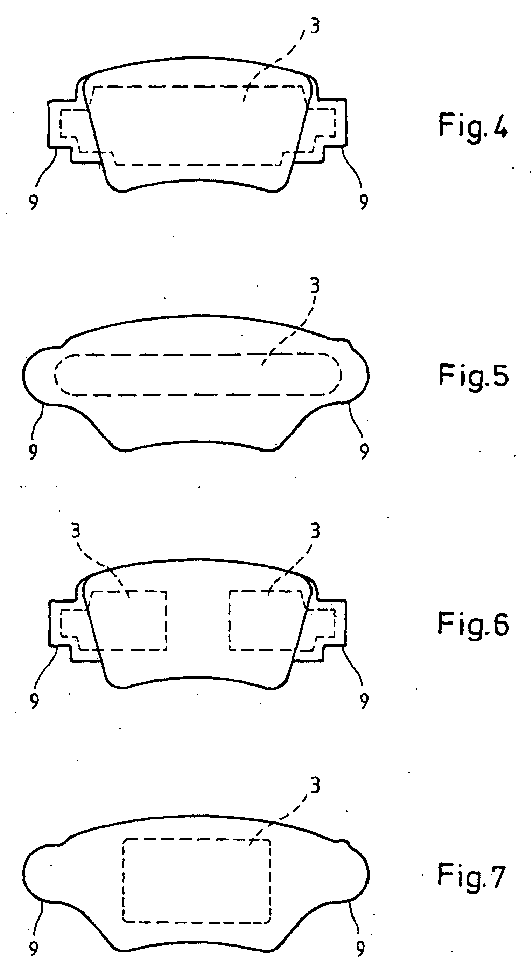

Figur 4 zeigt die Kontur eines Bremsbelages, in die in gestrichelten Linien die Kontur des Einlegeteils 3 eingezeichnet ist. Das Einlegeteil 3 erstreckt sich praktisch über die gesamte Fläche des Bremsbelages, so daß sich dieser sowohl als kolbenseitiger als auch als faustseitiger Bremsbelag eignet. Seitliche Führungsansätze 9 werden ebenfalls erfaßt.

Das Ausführungsbeispiel nach Figur 5 unterscheidet sich von dem nach Figur 4 lediglich durch die Form des Bremsbelages.

Figur 6 hingegen zeigt einen Bremsbelag, der sich lediglich für die faustseitige Montage eignet. Es sind zwei Einlegeteile 3 vorgesehen, die sich in die Bereiche der Führungsansätze 9 hineinerstrecken und im übrigen diejenigen Bereiche überdecken, in die die Zuspannungskräfte eingeleitet werden.

Figur 7 schließlich zeigt einen Bremsbelag ausschließlich für die kolbenseitige Montage.

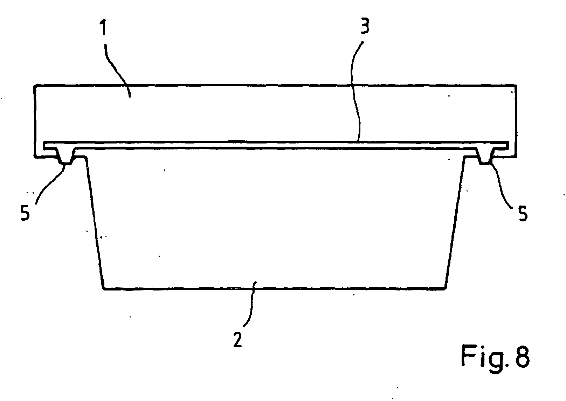

Die Ausführungsform nach Figur 8 unterscheides sich von der nach Figur 1 dadurch, daß die Vorsprünge 5 des Einlegeteils 3 nicht in das Material des Reibbelags 2 hineinragen, sondern seitlich neben dem Reibbelag 2 von der Trägerplatte 1 abstehen. Außerdem handelt es sich im vorliegenden Fall um eine rein mechanische Verschleißanzeige ohne elektrischen Anschluß.

Im Rahmen der Erfindung sind durchaus Abwandlungsmöglichkeiten gegeben. Dies gilt vor allem für die Formgebung des Einlegeteils, wobei neben den Funktionen der Verstärkung und der Verschleißanzeige eine Gewichtsminimierung von Bedeutung ist. Bei dem in Verbindung mit Figur 2 erläuterten Verfahren werden die Materialien in die Form eingeschüttet. Die Verwendung entsprechender Vorpreßlinge für einige oder alle der Schichten ist gleichermaßen möglich. Auch können der Kunststoff und/oder das Material des Reibbelags durch Spritzgießen miteinander verbunden werden. In jedem Falle ergibt sich ein sehr inniger Verbund. Auch können Kennzeichnungen in die Trägerplatte eingeprägt werden.

## Patentansprüche

1. Brems- oder Kupplungsbelag, insbesondere für Scheibenbremsen oder -kupplungen, mit einer Trägerplatte (1) aus Kunststoff, einem auf der Trägerplatte (1) befestigten Reibbelag (2) und einer Verschleißanzeige,
**dadurch gekennzeichnet,**
- **daß** in die Trägerplatte (1) mindestens ein flaches Einlegeteil (3) eingebettet ist und
- **daß** dieses Einlegeteil (3) mindestens einen aus der Trägerplatte (1) vorstehenden Vorsprung (5) trägt, der sich von der Trägerplatte aus über das Niveau einer Verbindungsfläche zwischen Reibbelag (2) und Trägerplatte (1) hinauserstreckt und in den Reibbelag (2) eingreift.

2. Brems- oder Kupplungsbelag nach Anspruch 1, **dadurch gekennzeichnet, daß** das Einlegeteil (3) in einem Bereich der Trägerplatte (1) angeordnet ist, in den die Zuspannkräfte eingeleitet werden.

3. Brems- oder Kupplungsbelag nach einem der Ansprüche 1 und 2, **dadurch gekennzeichnet, daß** die Trägerplatte (1) mindestens einen seitlichen Führungsansatz (9) aufweist und daß sich das Einlegeteil (3) in den Bereich des Führungsansatzes hineinerstreckt.

4. Brems- oder Kupplungsbelag nach einem der Ansprüche 1 bis 3, **dadurch gekennzeichnet, daß** das Einlegeteil (3) aus elektrisch leitfähigem Material besteht.

5. Brems- oder Kupplungsbelag nach einem der Ansprüche 1 bis 4, **dadurch gekennzeichnet, daß** das Einlegeteil (3) als mit Rippen versehenes Lochblech (4) ausgebildet ist.

6. Brems- oder Kupplungsbelag nach einem der Ansprüche 1 bis 5, **dadurch gekennzeichnet, daß** die Trägerplatte (1) aus duroplastischem Kunststoff besteht.

7. Verfahren zum Herstellen eines Brems- oder Kupplungsbelags, insbesondere für Scheibenbremsen oder -kupplungen, **dadurch gekennzeichnet, daß** ein Reibmaterial, in die Form eines Reibbelags (2) gebracht und mit einem Kunststoffmaterial verpreßt wird, das die Form einer Trägerplatte (1) hat, wobei in das Kunststoffmaterial der Trägerplatte ein flaches Einlegeteil (3) derart eingebettet wird, daß wenigstens ein Vorsprung aus dem Material der Trägerplatte im Bereich einer Verbindungsebene in das Reibmaterial vorspringt und in dieses eingepaßt wird.

8. Verfahren nach Anspruch 7, **dadurch gekennzeichnet, daß** die Materialien in eine Form geschüttet und in dieser verpreßt werden.

9. Verfahren nach Anspruch 7 oder 8, **dadurch gekennzeichnet, daß** mindestens ein Teil der Materialien als Vorpreßling vorgeformt wird.

10. Verfahren nach einem der Ansprüche 7 bis 9, **dadurch gekennzeichnet, daß** der Kunststoff und/oder das Reibmaterial durch Spritzgießen verpreßt wird.

## Claims

1. A brake or clutch lining, particularly for disc brakes or clutches, including a support plate (1) of plastic material, a friction lining (2) secured to the support plate (1) and a wear indicator, **characterised in that** at least one flat insert member (3) is embedded in the support plate (1) and that this insert member (3) carries at least one projection (5), which projects out of the support plate (1) and extends from the support plate beyond the level of a connecting surface between the friction lining (2) and support plate (1) and engages in the friction lining (2).

2. A brake or clutch lining as claimed in Claim 1, **characterised in that** the insert member (3) is disposed in a region of the support plate (1) into which the clamping forces are introduced.

3. A brake or clutch lining as claimed in one of Claims 1 and 2, **characterised in that** the support plate (1) has at least one lateral guide formation (9) and that the insert member (3) extends into the region of the guide formation.

4. A brake or clutch lining as claimed in one of Claims 1 to 3, **characterised in that** the insert member (3) consists of electrically conductive material.

5. A brake or clutch lining as claimed in one of Claims 1 to 4, **characterised in that** the insert member (3) is constructed in the form of an apertured plate (4) provided with ribs.

6. A brake or clutch lining as claimed in one of Claims 1 to 5, **characterised in that** the support plate (1) consists of duroplastic plastic material.

7. A method of manufacturing a brake or clutch lining, particularly for disc brakes or clutches, **characterised in that** a friction material is formed into the shape of a friction lining (2) and pressed with a plastic material, which has the shape of a support plate (1), whereby a flat insert member is embedded into the plastic material of the support plate such that at least one projection projects out of the material of the support plate in the region of a connecting plane into the friction material and is fitted into it.

8. A method as claimed in Claim 7, **characterised in that** the materials are charged into a mould and are pressed in it.

9. A method as claimed in Claim 7 or 8, **characterised in that** at least a proportion of the materials is pre-shaped in the form of a rough shaped blank.

10. A method as claimed in one of Claims 7 to 9, **characterised in that** the plastic material and/or the friction material is pressed by injection moulding.

## Revendications

1. Garniture de frein ou d'embrayage, en particulier pour freins ou embrayages à disque, comportant une plaque support (1) en plastique, une garniture de friction (2) fixée sur cette plaque support (1) et un indicateur d'usure,
**caractérisée par le fait**
- **que** dans la plaque support (1) est placée au moins une pièce plate encastrée (3) et
- **que** cette pièce encastrée (3) porte au moins une saillie (5) saillant de la plaque support (1) qui s'étend de la plaque support au-delà du niveau d'une surface de jonction entre la garniture de friction (2) et la plaque support (1) et s'engage dans la garniture de friction (2).

2. Garniture de frein ou d'embrayage selon la revendication 1, **caractérisée par le fait que** la pièce encastrée (3) est placée dans une zone de la plaque support (1) dans laquelle sont appliquées les forces de serrage.

3. Garniture de frein ou d'embrayage selon l'une des revendications 1 et 2, **caractérisée par le fait que** la plaque support (1) présente au moins un appendice latéral de guidage (9) et que la pièce encastrée (3) entre dans la zone de cet appendice de guidage.

4. Garniture de frein ou d'embrayage selon l'une des revendications 1 à 3, **caractérisée par le fait que** la pièce encastrée (3) est en matière conductrice de l'électricité.

5. Garniture de frein ou d'embrayage selon l'une des revendications 1 à 4, **caractérisée par le fait que** la pièce encastrée (3) est formée d'une plaque perforée (4) pourvue de rainures.

6. Garniture de frein ou d'embrayage selon l'une des revendications 1 à 5, **caractérisée par le fait que** la plaque support (1) est en plastique thermodurcissable.

7. Procédé de fabrication d'une garniture de frein ou d'embrayage, en particulier pour freins ou embrayages à disque, **caractérisé par le fait qu'**on donne à une matière de friction la forme d'une garniture de friction (2) et la comprime avec une matière plastique qui a la forme d'une plaque support (1), en mettant une pièce plate encastrée (3) dans la matière plastique de la plaque support de façon telle qu'au moins une saillie fasse saillie de la matière de la plaque support, dans la zone d'une plan de jonction, dans la matière de friction et s'encastre dans celle-ci.

8. Procédé selon la revendication 7, **caractérisé par le fait qu'**on verse les matières dans un moule et les comprime dans celui-ci.

9. Procédé selon l'une des revendications 7 et 8, **caractérisé par le fait qu'**on préforme au moins une partie des matières sous forme de comprimé.

10. Procédé selon l'une des revendications 7 à 9, **caractérisé par le fait qu'**on comprime la matière plastique et/ou la matière de friction par moulage par injection.
